# EUROPEAN PATENT APPLICATION

(11) **EP 4 756 706 A1**
(43) Date of publication of application: **10.06.2026**
(21) Application number: 24307042.2
(22) Date of filing: 05.12.2024
(51) Int. Cl.: G06T 5/60, G06T 5/70

(54) **NEURAL NETWORK-BASED FILM GRAIN ANALYSIS**

(71) Applicant: InterDigital CE Patent Holdings, SAS, 75017 Paris (FR)
(72) Inventor: AMEUR, Zoubida, 35510 CESSON SEVIGNE (FR); LEFEBVRE, Frederic, 35000 RENNES (FR); DE LAGRANGE, Philippe, 35830 BETTON (FR); RADOSAVLJEVIC, Milos, 35000 RENNES (FR)
(74) Representative: Vossius & Partner Patentanwälte Rechtsanwälte mbB

(57) **Abstract**

Systems, methods, and instrumentalities are disclosed for using a neural network (NN)-based film grain (FG) analysis. For example, a device may include a processor that is configured to perform one or more of the following. The device (e.g., a video processing device) may obtain a grainy video. The grainy video may be a video source with film grain. The device may feed the grainy video to a film grain analysis neural network (FGA-NN) module. The FGA-NN module may include a feature extraction network (e.g., a backbone) and at least one task-specific head. At least one task-specific head may be configured for a prediction task. For example, the prediction task may include a classification task and/or a regression task. The device may obtain at least one film grain characteristic (FGC) parameter based on an output of the FGA-NN module.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for a neural network (NN)-based film grain (FG) analysis.

In examples, a device (e.g., a video processing device) may include one or more processors. The one or more processors may be configured to perform one or more of the following.

The device may obtain a grainy video. The grainy video may be, or may include, a video (e.g., a video source) with film grain. The device may generate film grain characteristics. The device may feed the grainy video to a film grain analysis neural network (FGA-NN) module. The FGA-NN module may be, or may include, a feature extraction network (e.g., a backbone as described herein) and at least one task-specific head.

The at least one task-specific head may include at least one of a first task-specific head that is an interval prediction head, a second task-specific head that is a scaling factor prediction head, a third task-specific head that is a cutoff frequency prediction head, and/or a fourth task-specific head that is a log2scale prediction head. The interval prediction head may be configured to predict at least one interval associated with the grainy video. The scaling factor prediction head may be configured to predict at least one scaling factor associated with the grainy video. The cutoff frequency prediction head may be configured to predict at least one cutoff frequency associated with the grainy video. The log2scale prediction head may be configured to predict at least one log2scale factor associated with the grainy video.

At least one task-specific head may be associated with (e.g., configured to perform) a prediction task. For example, the prediction task may be, or may include, a classification task and/or a regression task.

The device may configure at least one of the interval prediction head or the scaling factor prediction head to perform a regression task. The device may configure at least one of the cutoff frequency prediction head or the log2scale prediction head to perform a classification task.

The feature extraction network (e.g., the backbone) of the FGA-NN module may be, or may include, at least one convolutional layer and/or at least one activation layer. In examples, some convolutional layers and activation layers may be grouped into a residual network and/or a set of residual networks. The feature extraction network (e.g., the backbone) of the FGA module may be or may include at least one residual network and/or another type of network with at least one convolutional layer and/or at least one activation layer (e.g., a dense network).

The at least one task-specific head of the FGA-NN module may be, or may include, at least one linear layer.

The device may feed the grainy video source (e.g., a set of grainy images) to learn film grain characteristics. For example, in a training stage, the device may apply at least one of a cross-entropy loss function to the cutoff frequency prediction head, an L2 loss function to the scaling factor prediction head, or an increment L1 loss function to the interval prediction head.

In examples, the device may obtain a grain-free video (e.g., a video without film grain) and feed the grain-free video with the grainy video to the FGA-NN module. In examples, the device may obtain at least one of a subpart of the grainy video or a subpart of the grain-free video and feed at least one of the subpart of the grainy video or the subpart of the grain-free video with the grainy video to the FGA-NN module. In examples, the device may obtain auxiliary information and feed the auxiliary information with the grainy video to the FGA-NN module.

The device may obtain (e.g., generate) at least one film grain characteristic (FGC) parameter based on an output of the FGA-NN module. For example, the at least one FGC parameter (e.g., the output of the FGA-NN module) may be associated with at least one of a format of FGC system enhancement supplemental information (SEI) or an alliance for open media (AOMedia) film grain synthesis 1 (AFGS1).

The device may apply the FGA-NN module and output at least one FGC parameter. Another device (e.g., a video decoding device) and/or another external device may add film grain (e.g., also referred to as film grain synthesis) to a grain-free video based on at least one FGC parameter.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 illustrates an example of film grain coding in (e.g., two) stages.
FIG. 5 illustrates an example of film grain analysis and parameter estimation operations.
FIG. 6 illustrates an example of a film grain scaling function defined with the intensity interval and scaling factors.
FIG. 7 illustrates an example of cut-off frequency estimation.
FIGs. 8A and 8B illustrate example block diagrams of a film grain analysis module.
FIG. 9 illustrates an example of a dataset creation process.
FIG. 10 illustrates an example of film grain characteristic (FGC) system enhancement supplemental information (SEI) frequency model parameters visualized in a graphical tool.
FIG. 11 illustrates an example architecture of a film grain analysis neural network (FGA-NN).
FIG. 12 illustrates examples of qualitative results on a test set.
FIG. 13 illustrates examples of qualitative results with a corresponding predicted FGC SEI on grainy images obtained using another source of grain.
FIG. 14 illustrates an example of an FGA-NN with input including a pair of grainy and clean source videos.
FIG. 15 illustrates an example of an FGA-NN with source video input and an input including a subpart and/or a region of the source video.
FIG. 16 illustrates an example of an FGA-NN with source video input and an input including auxiliary information from the grainy source video.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

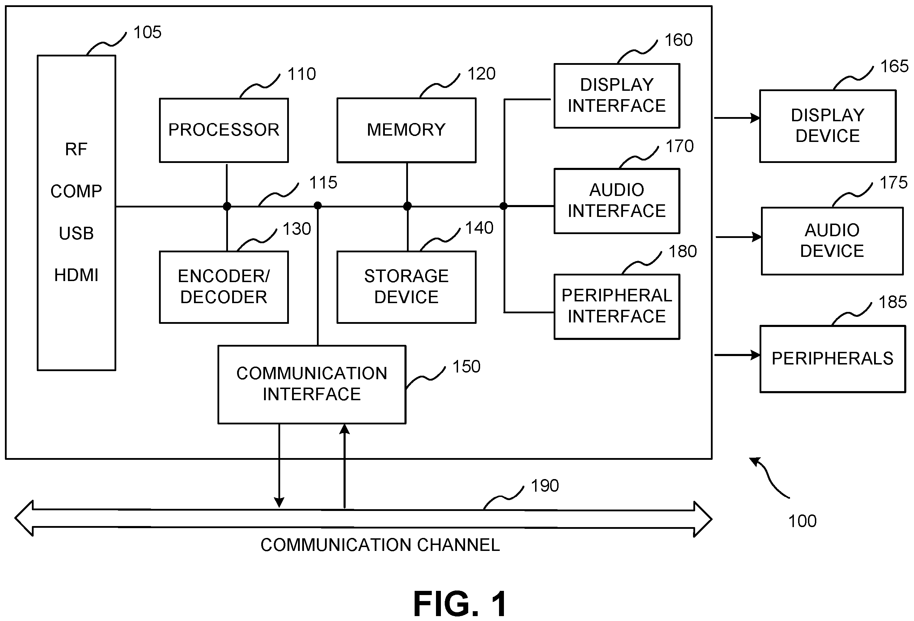

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g., cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

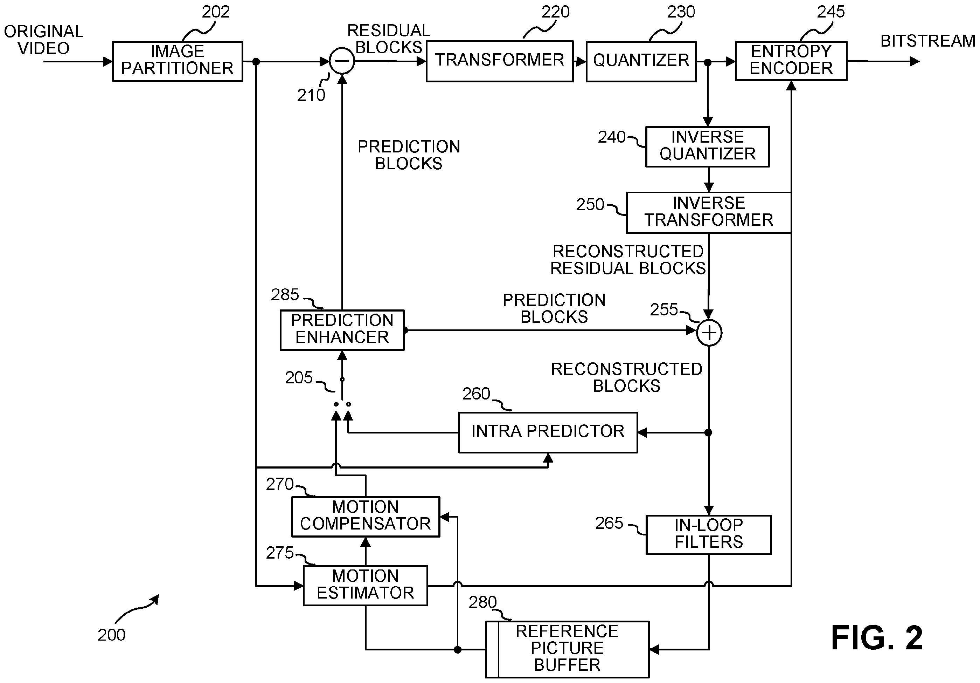

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

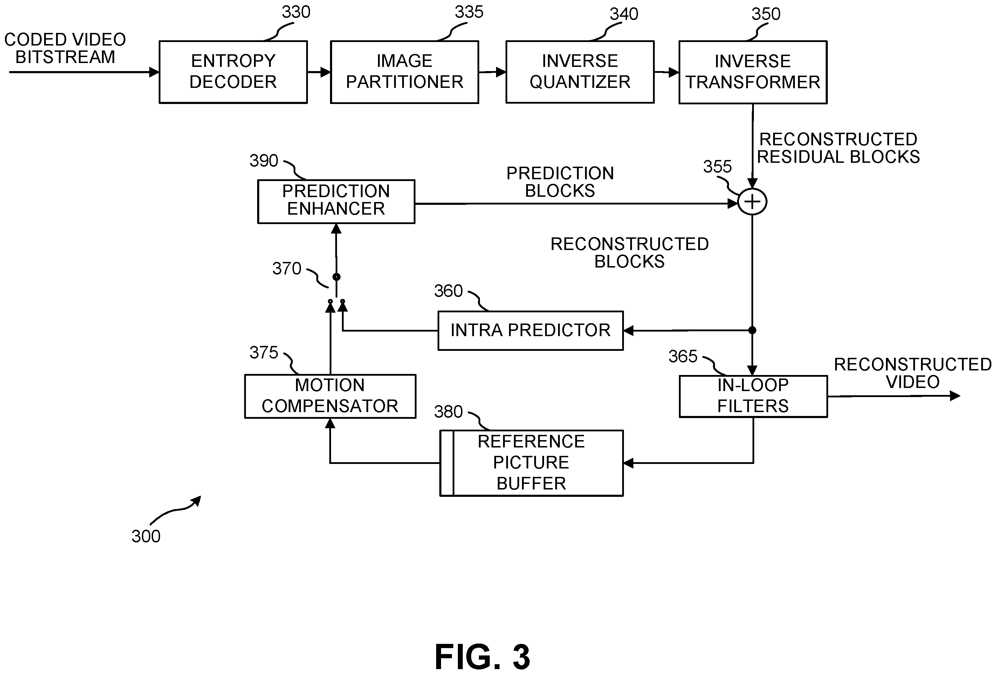

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y*, and chroma components, *U* and *V* (also denoted herein by *C*, *Cb, Cr*)*.*

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g., by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Systems, methods, and instrumentalities are disclosed for a neural network (NN)-based film grain (FG) analysis.

In examples, a device (e.g., a video processing device) may include one or more processors. The one or more processors may be configured to perform one or more of the following.

The device may obtain a grainy video. The grainy video may be, or may include, a video (e.g., a video source) with film grain. The device may generate film grain characteristics. The device may feed the grainy video to a film grain analysis neural network (FGA-NN) module. The FGA-NN module may be, or may include, a feature extraction network (e.g., a backbone as described herein) and at least one task-specific head.

The at least one task-specific head may include at least one of a first task-specific head that is an interval prediction head, a second task-specific head that is a scaling factor prediction head, a third task-specific head that is a cutoff frequency prediction head, and/or a fourth task-specific head that is a log2scale prediction head. The interval prediction head may be configured to predict at least one interval associated with the grainy video. The scaling factor prediction head may be configured to predict at least one scaling factor associated with the grainy video. The cutoff frequency prediction head may be configured to predict at least one cutoff frequency associated with the grainy video. The log2scale prediction head may be configured to predict at least one log2scale factor associated with the grainy video.

At least one task-specific head may be associated with (e.g., configured to perform) a prediction task. For example, the prediction task may be, or may include, a classification task and/or a regression task.

The device may configure at least one of the interval prediction head or the scaling factor prediction head to perform a regression task. The device may configure at least one of the cutoff frequency prediction head or the log2scale prediction head to perform a classification task.

The feature extraction network (e.g., the backbone) of the FGA-NN module may be, or may include, at least one convolutional layer and/or at least one activation layer. In examples, some convolutional layers and activation layers may be grouped into a residual network and/or a set of residual networks. The feature extraction network (e.g., the backbone) of the FGA module may be or may include at least one residual network and/or another type of network with at least one convolutional layer and/or at least one activation layer (e.g., a dense network).

The at least one task-specific head of the FGA-NN module may be, or may include, at least one linear layer.

The device may feed the grainy video source (e.g., a set of grainy images) to learn film grain characteristics. For example, in a training stage, the device may apply at least one of a cross-entropy loss function to the cutoff frequency prediction head, an L2 loss function to the scaling factor prediction head, or an increment L1 loss function to the interval prediction head.

In examples, the device may obtain a grain-free video (e.g., a video without film grain) and feed the grain-free video with the grainy video to the FGA-NN module. In examples, the device may obtain at least one of a subpart of the grainy video or a subpart of the grain-free video and feed at least one of the subpart of the grainy video or the subpart of the grain-free video with the grainy video to the FGA-NN module. In examples, the device may obtain auxiliary information and feed the auxiliary information with the grainy video to the FGA-NN module.

The device may obtain (e.g., generate) at least one film grain characteristic (FGC) parameter based on an output of the FGA-NN module. For example, the at least one FGC parameter (e.g., the output of the FGA-NN module) may be associated with at least one of a format of FGC system enhancement supplemental information (SEI) or an alliance for open media (AOMedia) film grain synthesis 1 (AFGS1).

The device may apply the FGA-NN module and output at least one FGC parameter. Another device (e.g., a video decoding device) and/or another external device may add film grain (e.g., also referred to as film grain synthesis) to a grain-free video based on at least one FGC parameter.

Film grain may be analyzed. In examples, film grain may be analyzed before encoding. In examples, synthesizing the film grain back may be done at the decoding stage, e.g., to preserve the artistic intent behind the film grain. Film grain analysis may be leveraged (e.g., during video production) to synthesize comparable grain patterns in different video sequences. As described herein, film grain may be analyzed in video content.

Film grain may be a desirable feature (e.g., in video production), for example, to create an appearance (e.g., a natural appearance) and/or to contribute to the expression of creative intent. Film grain may be (e.g., originally) created during the physical process of exposure and development of photographic film. A digital sensor(s) may not undergo such processes and leave digital video free of film grain. The absence of film grain may generate noiseless digital video, whose perfection, with clear and pronounced edges and monotonous regions, may impact (e.g., worsen) the subjective experience of the viewer. Graining (e.g., re-graining) video may improve visual experience. Content creators may use film grain before distributing the content. Creators (e.g., in the movie industry) may add film grain to video content to add texture and warmth to a video and/or to create a sense of nostalgia (e.g., to describe a previous era if the context or narrative calls for it).

Film grain (e.g., if/when added by content creators) may be adapted against different characteristics of the content, such as the intensity of the pixel values, presence and type of texture, saturation of the pixel values, etc. Grain patterns (e.g., different grain patterns) may be selected, for example, depending on the look that a creator wants to create. Grain characteristics may (e.g., additionally) be adapted, for example, depending on the considered color component, which may result in a colored film grain. The addition of film grain may be a process that is content-dependent, pixel-dependent, and/or region-dependent.

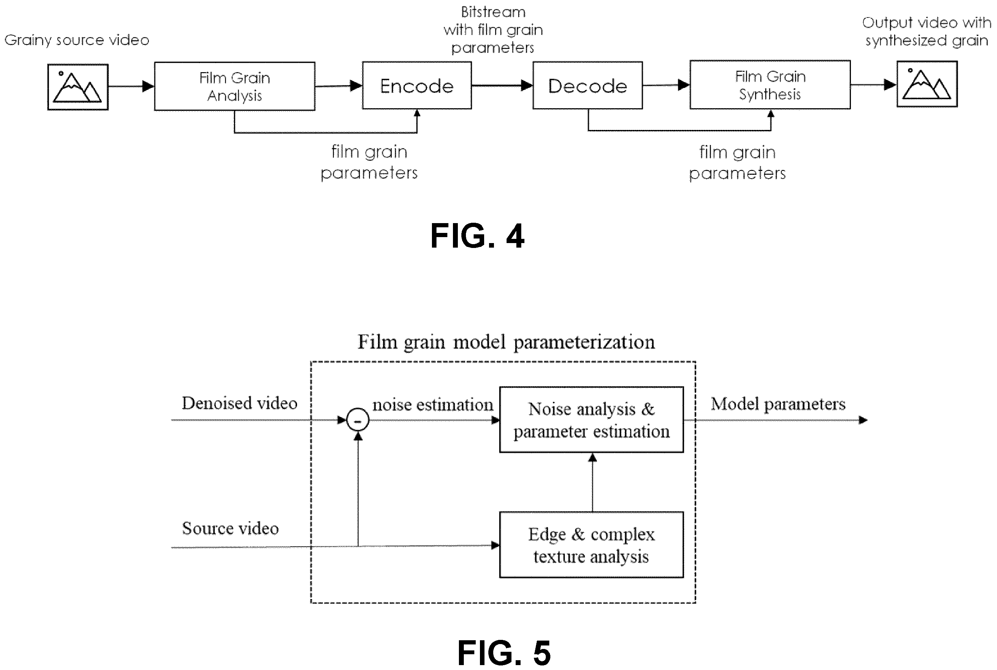

The random nature of film grain may pose a (e.g., major) challenge to video compression techniques. Compression (e.g., at low bitrates) may (e.g., tend to) eliminate film grain altogether, which may compromise the visual texture and/or artistic intent of the content. Conversely, preserving film grain at high bitrates may result in inefficient compression, e.g., because film grain preservation may need (e.g., require) a disproportionate bitrate. Film grain may be configured with a more sophisticated approach as described herein. For example, before the encoding stage, film grain may be (e.g., carefully) analyzed and modeled, e.g., to capture film grain characteristics. At the decoding stage, the modeled grain may be (e.g., seamlessly) reintroduced, for example, to recreate the desired aesthetic while maintaining efficient compression, e.g., as illustrated by example in FIG. 4.

Systems, methods, and instrumentalities may be described herein for analyzing (e.g., specific) characteristics of film grain.

FIG. 4 illustrates an example of film grain coding in (e.g., two) stages.

Film grain may be coded in video compression. A video codec may perform film grain compression by performing one or more of the following: removing the grain before encoding, estimating film grain parameters, and/or synthesizing film grain after decoding, e.g., using parameters that may be transmitted as metadata. A codec may provide varying degrees of fidelity (e.g., maximum fidelity) to the original grain, for example, while preserving the artistic intent during synthesis. In some video codecs, film grain may be handled in multiple (e.g., two) stages, such as analysis prior to encoding and synthesis after decoding.

Film grain may be indicated (e.g., signaled) in metadata. Some codecs may (e.g., natively) support signaling of film grain parameter values using (e.g., well-defined) messaging, such as a Supplemental Enhancement Information message (SEI). In some examples, a codec may signal film grain synthesis parameters as part of video data, such as a bitstream. For example, a bitstream may be defined to provide a mechanism for signaling film grain parameters as metadata, which may be compatible with multiple (e.g., most) video codecs.

A film grain characteristics (FGC) SEI message may enable the signaling of different film grain simulation models, blending modes, bit depths, transfer characteristics, chroma processing options, and/or model-specific parameters. An FGC SEI message may support frequency filtering, an autoregressive film grain model, additive blending modes, and/or multiplicative blending modes. An FGC SEI message may (e.g., also) indicate one or more intensity intervals, a film grain variance for an (e.g., each) intensity interval, and/or the spatial frequency characteristics of the film grain for an (e.g., each) intensity interval, which may provide (e.g., considerable) flexibility (e.g., to content creators and/or encoding manufacturers) on signaling different types and/or levels of film grain noise.

An FGC SEI may utilize (e.g., defined/specified) syntax to transmit parameters of the model to the decoder side. An FGC SEI may (e.g., or may not) provide one or more methods to estimate parameters and/or one or more methods pertaining to how to synthesize film grain. A device (e.g., a video encoding device) and/or an external device may use an FGC SEI message to characterize film grain that was present in the (e.g., original) source video material and that was removed, e.g., by pre-processing filtering and/or lossy compression. A device (e.g., a video decoding device) and/or an external device may use an FGC SEI message to synthesize film grain on decoded images, for example, even if (e.g., when) film grain was not present in the (e.g., original) source video material. Parameters (e.g., specifically tuned parameters) may be used to mask compression artifacts, for example, even if there was no film grain in the (e.g., original) content. An example of FGC SEI message syntax interpretation is shown in Table 1.

**Table 1 - Example of FGC SEI message syntax interpretation**

| Parameter | Range | Significance |
|---|---|---|
| fg_model_id | 0,1 | Model to be used in grain synthesis. 0: Frequency filtering, 1: Auto-regression |
| fg separate colour description_present fl ag | 0,1 | Defines whether the color description for the film grain specified is same as for the coded video sequence. |
| fg_blending_mode_id | 0,1 | Blending mode used to combine grain and decoded samples.0: Additive, 1: Multiplicative |
| fg comp model_present flag | 0,1 | Defines the presence of film grain model parameters for each color component |
| fg_num_intensity_intervals_minus1 | 0-255 | Defines the number of intensity intervals for each color component |
| fg_num_model_values_minus1 | 0-5 | Specifies the number of component model values available in the SEI (default values will be used for the remaining component model values) |
| fg_intensity_interval_lower bound | 0-255 | Lower bound for each intensity intervals for which the model is applicable |
| fg_intensity_interval_upper bound | 0-255 | Upper bound for each intensity intervals for which the model is applicable |
| fg_comp_model_value | | Component model values have different meaning depending on the value of fg film_grain_model id |
| fg characteristics_persistence flag | 0,1 | Indicates the persistence of the FGC SEI message. |

Component model values may specify one or more characteristics of film grain (e.g., the strength, shape, density, and/or other characteristics of the film grain).

A (e.g., unique) set of component model values may be signaled for an (e.g., each) intensity interval for a (e.g., each) color component to be processed. The value range of a (e.g., each) syntax element may be constrained, e.g., by specific practice or implementation.

A frequency-filtering film grain model may be signaled (e.g., film_grain_model_id = 0). The comp_model_values (e.g., for a frequency-filtering film grain model) may be interpreted, e.g., for a (e.g., each) color component, c, and intensity interval, I, for example, as follows:
comp_model_value[ c ][ i ][ 0 ] : the standard deviation of Gaussian noise
comp_model_value[ c ][ i ][ 1 ] : horizontal high cutoff frequency
comp_model_value[ c ][ i ][ 2 ] : vertical high cutoff frequency
comp_model_value[ c ][ i ][ 3 ] : horizontal low cutoff frequency
comp_model_value[ c ][ i ][ 4 ] : vertical low cutoff frequency
comp_model_value[ c ][ i ][ 5 ] : correlation between consecutive color components

In some examples, fg_comp_model_value[ c ][ i ][ j ] may be in the range of 0 to 2fgBitDepth[ c ] - 1, inclusive. The value of fgBitDepth[ c ] value may be derived or specified.

An autoregressive film grain model may be signaled (film_grain_model_id = 1). If (e.g., when) the autoregressive film grain model is signaled (film_grain model_id = 1), the comp_model_values (e.g., for an autoregressive film grain model) may be interpreted as follows:
comp_model_value[ c ][ i ][ 0 ] : the standard deviation of Gaussian noise
comp_model_value[ c ][ i ][ 1 ] : first order correlation for neighboring samples ( x - 1, y ) and (x, y -1)
comp_model_value[ c ][ i ][ 2 ] : correlation between consecutive color components
comp_model_value[ c ][ i ][ 3 ] : first order correlation for neighboring samples ( x - 1, y - 1 ) and (x + 1, y-1)
comp_model_value[ c ][ i ][ 4 ] : aspect ratio of the modelled grain
comp_model_value[ c ][ i ][ 5 ] : second order correlation for neighboring samples ( x - 2, y) and (x, y-2)

In some examples, fg_comp_model_value[ c ][ i ][ j ] may be in the range of -2( fgBitDepth[ c ] - 1 ) to 2( fgBitDepth[ c ] - 1 ) - 1, inclusive. The value of fgBitDepth[ c ] may be derived or specified.

A scaling function (e.g., a piecewise constant scaling function) may be defined, for example, based on (e.g., using) fg_comp_model_value[ c][ i ][ 0 ] together with intensity interval boundaries. A scaling function may indicate the level at which the film grain may be perceived in the (e.g., final) output frame.

A grain blending method may be, for example, an additive grain blending method (e.g., fg_blending_mode_id = 0) or a multiplicative grain blending method (e.g., fg_blending_mode_id = 1).

Film grain analysis may be performed. A film grain analysis process may be applied on the encoder side. A film grain analysis may be a non-normative process, e.g., regardless of the synthesis method and/or type of coding in use. A film grain analysis may be implemented, for example, as a pre-processing step or as a part of the encoding process. A film grain analysis may (e.g., ultimately) provide indicative features of the film grain, e.g., in accordance with the selected parameterized model and supported metadata. A film grain analysis may determine film grain model parameters to be sent, for example, in an appropriate metadata mechanism (e.g., in an SEI message), to enable content-aware decoder-side film grain synthesis.

FIG. 5 illustrates an example of film grain analysis and parameter estimation operations.

FIG. 5 depicts an example of a simplified framework for film grain analysis. As shown in FIG. 5, inputs to a film grain analysis process may include, for example, the grainy source video and the denoised representation (e.g., video). Edge and complex texture analysis may be performed to determine a map of flat and non-flat regions in a scene. Edge and complex texture analysis may be performed, for example, since high-frequency components, such as edges and texture, may interfere with the analysis process of the film grain, which may also reside in high frequencies. In some examples, noise may be estimated (e.g., without the input of a denoised version of the source video), for example, by using one or more (e.g., appropriate) noise estimation techniques.

A film grain analysis workflow may include one or more operations, which may be divided into (e.g., two) groups or stages of operations, such as film grain independent operations and/or film grain model-specific operations.

Film grain model-independent operations may include, for example, noise estimation and/or determination of other information about the characteristics of the input video.

An operation (e.g., a pre-processing operation) to produce a noise estimate (e.g., also known as a film grain image) may include, for example, denoising the video and finding the difference between source and denoised pairs to determine a noise estimate (e.g., a film grain image).

An operation (e.g., a pre-processing operation) to produce other information about the characteristics of the input video may include, for example, performing an edge and texture analysis.

Film grain model-specific operations may include a film grain analysis and parameter estimation operation. A film grain analysis and parameter estimation operation may determine model parameters, for example, based on the outputs from one or more film grain model-independent operations. A film grain analysis and parameter estimation may include, for example, one or more of the following: estimation of grain amplitude, e.g., based on underlying picture intensity; and/or estimation of frequency limits (e.g., cut-off frequencies) for frequency-based models or auto-regressive parameters, e.g., based on (e.g., relevant) picture intensity levels.

Film grain analysis and parameter estimation may be based on (e.g., may depend on) the selected parameterized model.

Denoising may be used in video distribution systems. Input source video may be denoised, for example, using motion adaptive, motion compensated temporal filtering (MCTF) methods, an (e.g., a hand-crafted) image denoising algorithm (e.g., block-matching and 3D filtering (BM3D)), and/or a deep learning technique. In some examples, a reconstructed video sequence may be used, e.g., which may reduce or avoid utilization of a denoised sequence in film grain estimation. A reconstructed sequence (e.g., depending on the quantization parameter) may (e.g., highly) approximate a denoised sequence, for example, with most of the details preserved but with high frequencies (e.g., noise) removed. Film grain images that represent noise estimates may be generated (e.g., after denoising), for example, by computing the difference between the input frames (e.g., the original input frames) and the filtered/denoised frames that correspond to the same time instance.

Edge and texture analysis may be performed. Denoising may (e.g., often) alter (e.g., actual) picture details, e.g., in addition to altering noise. A film grain image resulting from the difference of a source picture and a denoised picture may include more than film grain in the textured and/or edge areas. Film grain parameters may be estimated on flat areas, e.g., avoiding textured and/or edge areas. An edge detection algorithm, such as the Canny edge detector, may be used, for example, to estimate film grain parameters on flat areas, e.g., avoiding textured and/or edge areas. The film grain image and map of flat regions may (e.g., then) be provided to a noise analysis and parameter estimation module.

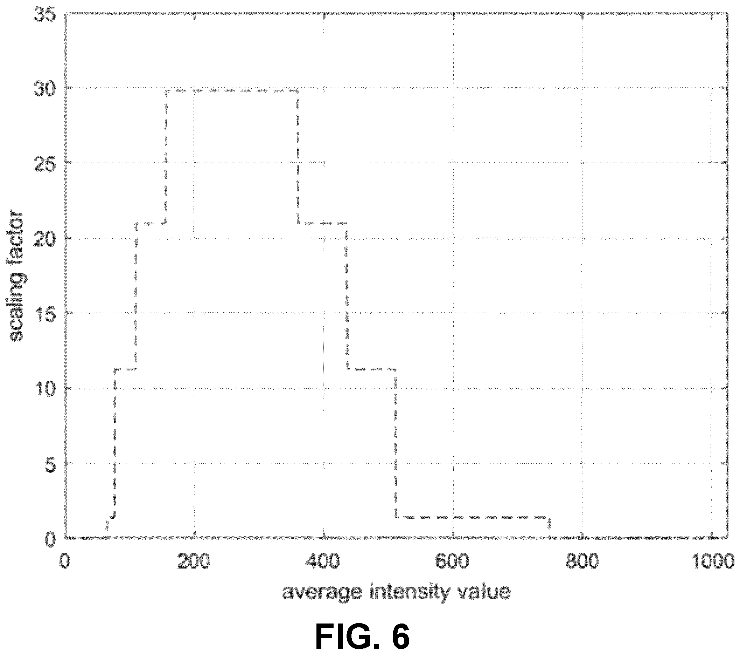

Grain amplitude may be determined. Film grain may be based on (e.g., dependent on) the local characteristics of an image. Different amplitudes of film grain may be applied for different intensities and/or intensity intervals of an input image. The relationship between local image intensity and grain amplitude (e.g., referred to as a scaling function) may be determined, for example, by analyzing the film grain image, the filtered image, and/or the flat-region map (e.g., produced during pre-processing). A scaling function may be represented, for example, as a polynomial function or a lower-degree approximation of a (e.g., polynomial) scaling function. The representation of the scaling function may be based on (e.g., considered depending on) the implementation. For example, a piecewise linear function or stepwise constant scaling function may be considered, e.g., as illustrated in FIG. 6.

FIG. 6 illustrates an example of a film grain scaling function defined with the intensity interval and scaling factors. A film grain scaling function defined with the intensity interval and scaling factors may be used in an FGC SEI message.

An analysis may be performed on a grid of non-overlapping blocks (e.g., that belong to a flat region), which may be determined by the edge and texture analysis stage. One or multiple (e.g., two) features may be computed for a (e.g., each) block. The feature(s) may include, for example, one or more of the following: the average intensity of the block in the denoised image and/or the noise level of the block in the film grain image. The feature(s) may define observations at observation points that may be used in further analysis. A scaling function may be obtained, for example, by fitting a polynomial function to the observations. The observations may be processed (e.g., further) before a fitting function, for example, to remove outliers and/or to improve estimated function precision.

Cut-off frequencies may be utilized for a frequency filtering model. Cut-off frequencies may be estimated, for example, as follows. The film grain image (e.g., noise estimate) may be scanned block by block, for example, using a non-overlapping blocks grid, e.g., where the block size (denoted as N) may depend on the specific implementation. Blocks (e.g., only blocks) within the flat part of a film grain image may be processed further. A forward transform (e.g., discrete cosine transform-2 (DCT-2)) may be applied for a (e.g., each) block within a flat region. A (e.g., each) coefficient resulting from the transform may (e.g., then) be squared. An average squared transformed block may be computed over (e.g., all) the available squared transformed blocks. Average vectors by columns and by rows may be calculated (e.g., the direct current (DC), e.g., the first element of DCT), and the component for the first row and the first column may be discarded from the computation.

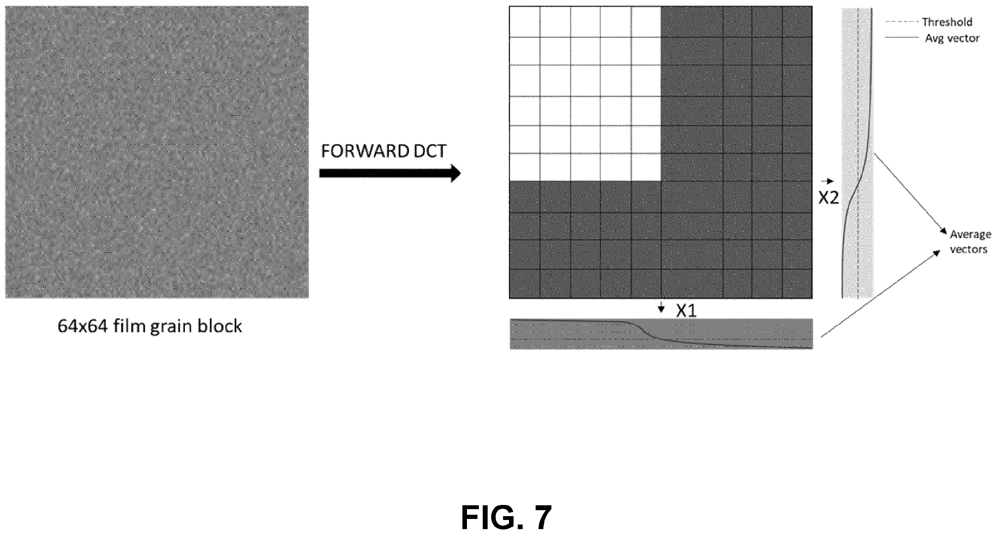

The average vectors by column and row may be regularized, e.g., to suppress peaks. The average vectors may be represented as a curve. Intersection points of the curve with a total average value (avg) of a block may be computed. The value of avg may be used as a threshold for other computations. Cut-off frequencies may be obtained, for example, based on the analysis of the intersection point(s). The (e.g., appropriate) intersection points may be chosen to represent the cut-off frequencies of the frequency-filtered film grain model, e.g., as illustrated by example in FIG. 7.

FIG. 7 illustrates an example of cut-off frequency estimation. As shown in FIG. 7, intersection points x1 and x2 may represent estimated frequencies.

Autoregressive (AR) model coefficients may be determined (e.g., estimated), for example, for an autoregressive model. A codec may support an autoregressive model. Film grain may be reconstructed at the decoder side, for example, based on one or more of the following parameters that may be sent (e.g., signaled by an encoder) to the decoder: lag value *L*, AR-coefficients *a*0... an, a set of points for a piecewise linear scaling function for a (e.g., each) color component, and/or values *b*Cb, *d*Cb, *h*Cb , *b*Cr, *d*Cr, *h*Cr for a look up table (LUT) index of chroma components.

Film grain may be determined (e.g., estimated) as a computer vision task. In some examples, film grain analysis and synthesis may be performed by deep learning-based frameworks. An example of a deep-learning film grain analysis and synthesis framework is Style-FG. A deep-learning film grain analysis and synthesis framework may incorporate a film grain analysis module and a corresponding synthesis module. An analysis module (e.g., referred to as a "Style Encoder") may take grainy images as input and generate a "style vector" as a compact representation. The style vector may allow for flexible and efficient synthesis of film grain on (e.g., any) content via the synthesis module, which may support (e.g., ensure) fidelity to the ground truth. The characteristics encoded in the style vector may not be disentangled, which may mean the relationship between (e.g., specific) film grain properties and (e.g., individual) vector components is unclear. The vector format may be compact and easy to transmit. The vector format may not align with other information or messaging (e.g., SEI messages), which may lead to (e.g., additional) mapping from the vector format to another format (e.g., SEI format).

Another example of a deep learning-based framework is 3R invertible neural network (INN), which follows a different paradigm than Style-FG. 3R-INN may rescale a grainy image to a lower resolution, remove film grain, and reduce power consumption of the grainy image if (e.g., when) displayed. 3R-INN may be a multi-task model for film grain removal/analysis and synthesis and/or (e.g., also) for other tasks, which may include upscaling, downscaling, and/or energy-efficient content generation. 3R-INN (e.g., if/when applied to film grain tasks) may offer/provide one or more of the following advantages: an INN architecture and/or latent film grain modeling.

An INN architecture framework may leverage bijective mappings, which may enable tasks to be performed in multiple (e.g., both) directions. For example, film grain removal and analysis may be conducted during a forward pass while film grain synthesis may be achieved in an inverse pass.

Latent film grain modeling (e.g., in 3R-INN, unlike Style-FG) may synthesize film grain, for example, without (e.g., explicit) metadata. Film grain removal (e.g., during a forward pass) may capture the film grain information in a latent variable, which may be constrained to follow a (e.g., standard) Gaussian distribution. Film grain may be restored (e.g., directly) from the latent variable.

3R-INN may have one or more limitations. For example, 3R-INN may rely on computationally intensive neural networks, which may make 3R-INN impractical for use in end-user devices, such as decoders with limited resources (e.g., even though 3R-INN may be deemed "light weight" by computer vision standards).

Film grain characteristics (e.g., accurate film grain characteristics) for grainy video content may be provided in one or more formats that may be utilized by one or more codecs, such as FGC SEI (e.g., utilized by one or more codecs) and/or alliance for open media (AOMedia) film grain synthesis 1 (AFGS1) (e.g., utilized by one or more codecs). A film grain analysis tool implemented in a software model, as described herein, may rely on image processing techniques to estimate grain parameters from grainy and clean image pairs. In some examples, film grain characteristics determined by a film grain analysis tool may not be accurately captured. For example, learning-based methods (e.g., such as Style-FG and 3R-INN, as described herein) may offer higher accuracy in determining film grain characteristics but may involve extensive training datasets, may produce parameters incompatible with codecs (e.g., based on video coding standards), and/or may utilize complex synthesis modules. The integration of learning-based methods of film grain analysis into video coding systems may be challenging, e.g., for resource-constrained devices.

A learning-based method described herein may match at least one film grain characteristics (e.g., FGC SEI or AFGS1) may support (e.g., respect) the fidelity of the original ground truth film grain, e.g., without compromising accuracy and/or compatibility (e.g., with the FGC SEI or AFGS1).

A learning-based framework, as described herein, may analyze film grain, e.g., for a grainy video. The learning-based framework may output film grain characteristics (e.g., in a format of FGC SEI or AFGS1 and/or compatible with one or more video coding standards). The learning-based framework described herein may take advantage of the accuracy of learning-based models and preserve compatibility (e.g., be compatible) with one or more video coding methods. The learning-based framework may enable accurate estimation and synthesis of film grain parameters while providing (e.g., guaranteeing) compatibility with one or more types of video coding methods and/or with other formats such as AFGS1.

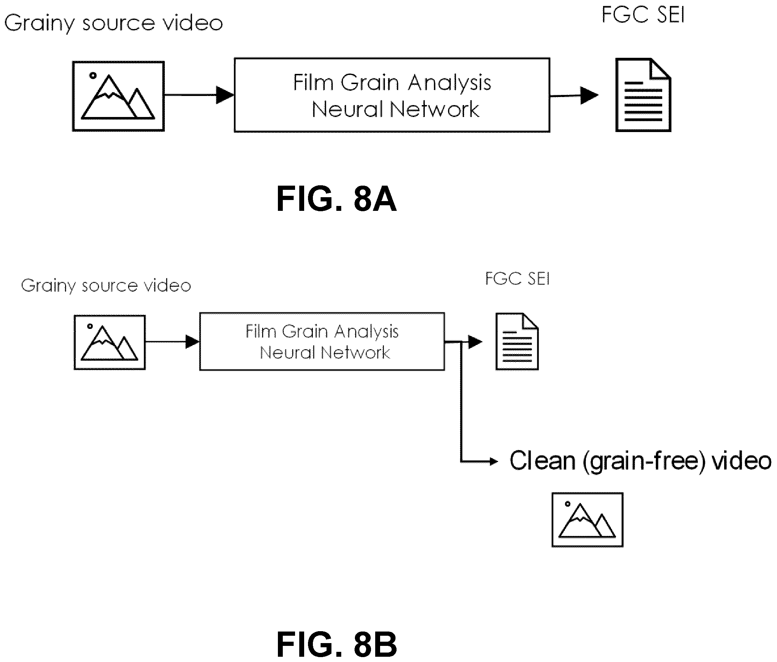

In some examples, a neural network-based module for film grain analysis may take a grainy source video (e.g., frame(s)) as an input and provide corresponding film grain characteristics in one or more formats (e.g., FGC SEI or AFGS1) as an output. An example may be shown in FIG. 8.

FIGs. 8A and 8B illustrate example block diagrams of a film grain analysis module with examples of inputs and outputs. As illustrated in FIG. 8A, an input may be a grainy source video, the film grain analysis module may be a neural network, and the output may be at least one FGC parameter, e.g., in an FGC SEI format or an AFGS1 format. In some examples, the input may be a portion (e.g., part) of the grainy source video (e.g., a crop, a block, etc.). As illustrated in FIG. 8B, an input may be a grainy source video, the film grain analysis module may be a neural network, and the output may be at least one FGC parameter (e.g., in an FGC SEI format or an AFGS1 format) and a clean (e.g., grain-free) video.

In examples, different inputs may be provided (e.g., fed) to the film grain analysis module, and the film grain analysis module may generate one or more outputs, e.g., as described herein.

In examples, inputs to a film grain analysis module may include a pair of inputs, such as a grainy source video and a grain-free video (e.g., version). The pair of the grainy source video and the grain-free version may be obtained using a denoising method and/or by encoding/decoding at a (e.g., sufficient) bitrate to eliminate film grain.

In examples, inputs to a film grain analysis module may include a grainy source video and auxiliary information. The auxiliary information may be extracted from the grainy source video (e.g., edges map, histogram, frequency representation, etc.).

In examples, inputs to a film grain analysis module may include a grainy source video with a sub-region from the grainy source video or a sub-region from a grain-free version of the grainy source video (e.g., from a uniform region).

In examples, as illustrated in FIG. 8B, outputs of the film grain analysis module may include (e.g., further include) a grain-free version of the grainy source input.

An analysis module may support (e.g., effective) synthesis in real-world video delivery and consumption scenarios. For example, an analysis module may provide accurate parameters, format the parameters according to expected formats (e.g., as may be indicated in standardized specifications), and/or enable a computationally efficient, hardware-friendly synthesis module. In examples, the analysis module may leverage the advantages of deep learning techniques while addressing (e.g., minimizing or avoiding) the drawbacks of one or more methods (e.g., as may be described herein).

In examples, an analysis module may align with an FGC SEI message, incorporate a frequency filtering model, and/or utilize an additive blending approach. An analysis module may be similarly interpolated or applied to other formats (e.g., AFGS1) and/or to other models (e.g., autoregressive), for example, as described herein.

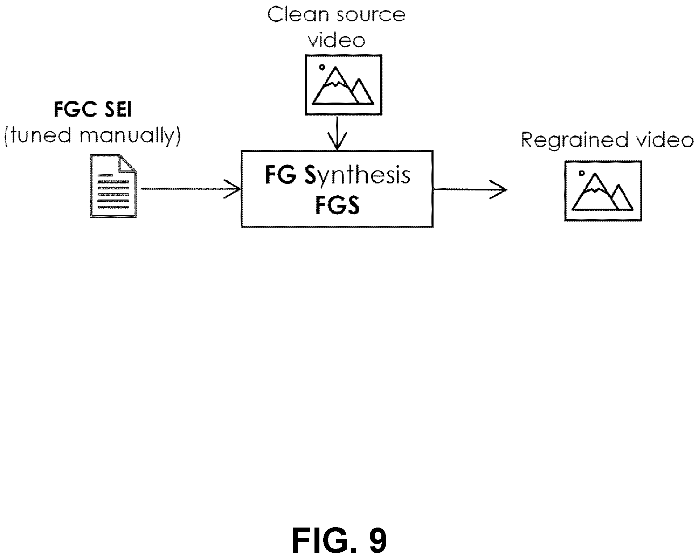

A dataset may be used to train an analysis module. A dataset may include, for example, pairs of grainy videos and their corresponding film grain characteristics, e.g., formatted as FGC SEI. In examples, a set of FGC SEI configuration files may be generated (e.g., first). The files may (e.g., then) be used to add film grain to clean videos (e.g., grain-free videos), for example, using a film grain synthesis module, e.g., as illustrated by example in FIG. 9. The FGC SEI files may be generated (e.g., generated randomly), for example, adhering to a set of constraints to ensure the resulting film grain appeared visually correct, e.g., rather than resembling random noise.

FIG. 9 illustrates an example of a dataset creation process.

The frequency filtering model may define a number of intensity intervals (e.g., num intensity intervals minus1 [ c ]) and/or a number of model values (e.g., num model values minus1 [ c ]), for example, for a (e.g., each) color component for which the synthesis process is invoked. The number of intervals in a dataset may be defined. For example, the number of intervals may be fixed to 16 for Luma and/or six (6) for Chroma. In examples, the number of intervals may be increased (e.g., extended) to more intervals or decreased (e.g., reduced) to less intervals.

A scaling factor (SF) may be defined for an (e.g., each) intensity interval, i. For example, an SF may be defined to range within an interval, such as [0, 2 BitDepth-1]. One or more (e.g., two) other parameters may be defined, such as a horizontal high cut-off frequency and/or a vertical high cut-off frequency. These parameters may represent cut-off frequencies of a low-pass filter that may be used to generate a film grain pattern. In examples, cut off frequencies may be in the range [2, 14]. In some example datasets, a (e.g., only one) cut-off frequency may be derived, while another cut-off frequency may be (e.g., implicitly) derived.

In some examples, one or more (e.g., all) cut-off frequencies may be defined (e.g., as opposed to derived).

In some examples, a log2 scale factor may be used to scale a film grain scaling parameter (e.g., given a comp model value[ c ][ i ][ 0 ]). A (e.g., log2) scale factor may (e.g., also) limit the range of grain strength and/or may encourage the use of meaningful values. In some example datasets, multiple (e.g., three) different (e.g., log2) scale factors may be defined.

In examples, more or less log2scale factors may be defined, selected, derived, etc.

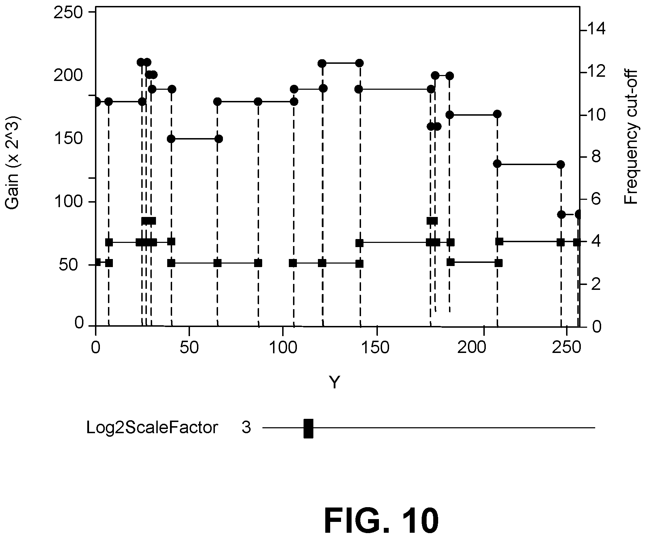

A model may (e.g., be trained to) learn to, for example (e.g., as shown in FIG. 10), predict for Luma, at 16 intervals, where an (e.g., each) interval may be associated with a cut-off frequency and a scaling factor. A (e.g., single) global scaling parameter (e.g., Log2scale) may be used for overall adjustment. FIG. 10 may show an example of the parameters to predict for Luma. FIG. 10 illustrates an example of FGC SEI frequency model parameters visualized in a graphical tool. As shown in FIG. 10, the X-axis may represent the luma pixel values [0,255]. The left Y axis may represent the scaling factors [0,255]. The right Y axis may represent the cut-off frequencies [2,14]. The dashed lines separate the 16 different intervals.

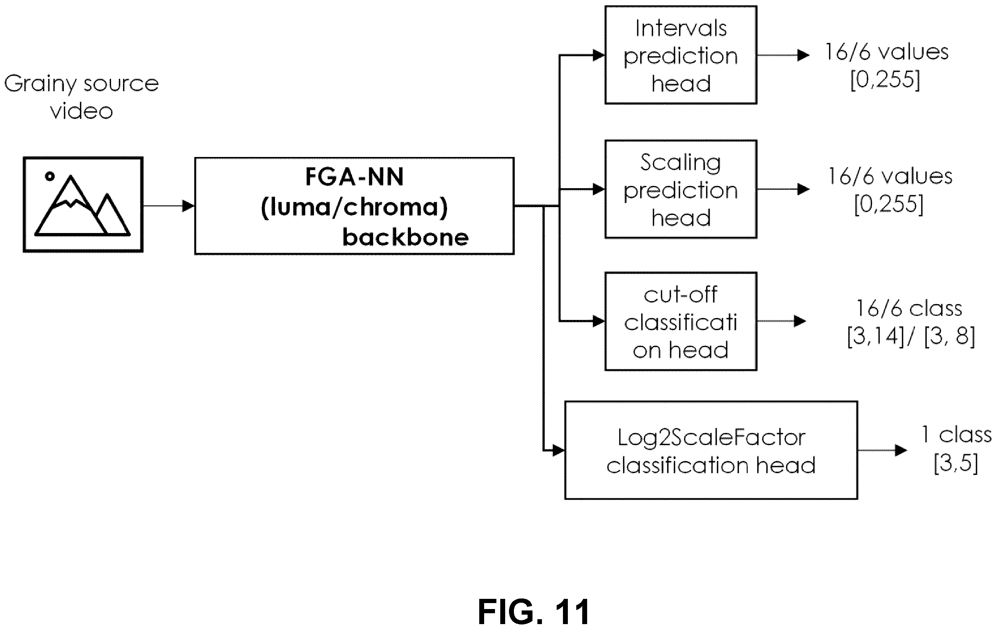

A Film Grain Analysis Neural Network (FGA-NN) module or system may employ a shared backbone to extract one or more features from grainy image inputs. In some examples, one or more task-specific heads may be applied to map the features to the desired outputs. For example, four distinct task-specific heads may be utilized to predict intervals, scaling factors, cutoff frequencies, and a log2scale factor, e.g., as illustrated by the example in FIG. 11. An FGA-NN module may adapt the output's dimension to Luma/Chroma. In some examples, prediction of the intervals and their corresponding scaling factors may be implemented as a regression task, e.g., where the model may predict values in range [0,255] normalized to [0,1]. In some examples, prediction of cutoff frequencies and log2scale may be implemented as a classification task, e.g., where the model may predict a class from the possible range.

As described herein, at least one task-specific head may include at least one of a first task-specific head that is an interval prediction head, a second task-specific head that is a scaling factor prediction head, a third task-specific head that is a cutoff frequency prediction head, and/or a fourth task-specific head that is a log2scale prediction head. The interval prediction head may be configured to predict at least one interval associated with the grainy video. The scaling factor prediction head may be configured to predict at least one scaling factor associated with the grainy video. The cutoff frequency prediction head may be configured to predict at least one cutoff frequency associated with the grainy video. The log2scale prediction head may be configured to predict at least one log2scale factor associated with the grainy video.

In some examples, the nature of tasks may be implemented differently, e.g., prediction of scaling factors may be treated as a classification task.

FIG. 11 illustrates an example architecture of an FGA-NN. The feature extraction network (e.g., the backbone) of the FGA-NN module may be, or may include, at least one convolutional layers and/or at least one activation layers. In examples, some convolutional layers and activation layers may be grouped into a residual network or a set of residual networks. The feature extraction network (e.g., the backbone) of the FGA module may be or may include at least one residual network and/or another type of network with at least one convolutional layer and/or at least one activation layer (e.g., a dense network). As described herein, each of the residual networks may be, or may include, corresponding convolutional layers and/or an activation function. The one or more task-specific heads may be, or may include, linear layers. Table 2 shows an example architecture of the network, which may be composed of a first convolutional layer, four residual networks (e.g., each composed of convolutional layers with LeakyRelu as an activation function and an average max pooling for down sampling, except the last one), followed by four parallel task-specific heads (e.g., each composed of two linear layers).

**Table 2 - Example architecture of an FGA-NN**

| FGA-NN | Layers | Downsample | Output dimension |
|---|---|---|---|
| Backbone | Convolution | - | 256x256x64 |
| | Residual Block | True | 128x128x128 |
| | Residual Block | True | 64x64x256 |
| | Residual Block | True | 32x32x512 |
| | Residual Block | True | 32x32x512 |
| | LeakyReLu | - | - |
| | AdaptiveAverage Pooling | - | 1x1x512 |
| | Dropout (0.5) | - | - |
| Cut-off frequency prediction head | Linear + LeakyReLu | - | 1024 |
| | Linear | - | # intervals |
| Intervals prediction head | Linear + LeakyReLu | - | 1024 |
| | Linear + Sigmoid | - | # intervals |
| Scaling factors prediction head | Linear + LeakyReLu | - | 1024 |
| | Linear + Sigmoid | - | # intervals |
| Log2scale prediction head | Linear + LeakyReLu | - | 1024 |
| | Linear | - | 1 |

Training objectives may include defining and/or applying task-specific loss functions during training. The dropout described in Table 2 may be used (e.g., used only) for the training. Task-specific loss functions may include, for example, one or more of the following: Cross-Entropy Loss for Cutoff Frequencies; L2 loss (e.g., mean squared error) for Scaling Factors; Incremental L1 Loss (e.g., mean absolute deviation) for Intervals; and/or cross-entropy loss for log2 scaling.

A cross-entropy loss for cutoff frequencies loss function may measure the discrepancy between the predicted and actual cutoff frequencies.

An L2 loss for scaling factors loss function may encourage the predicted values to closely match the ground truth scaling parameters.

An incremental L1 Loss for intervals loss function may combine an L1 loss, which may encourage the predicted intervals to be close to their true values, and an incremental custom loss, which may promote smooth transitions between consecutive intervals, e.g., to ensure output elements are sorted in an incremental order.

A cross-entropy loss for log2 scaling loss function (e.g., like the cutoff frequencies) may measure the discrepancy between the predicted log2 scaling values and the true log values.

A total loss function may combine the individual losses, for example, weighted by their respective regularization parameters, which may be set, e.g., to one (1).

In examples, other loss functions may be used, such as L1 instead of L2 and vice versa, or custom loss functions.

In examples, different weightings may be assigned to different loss functions.

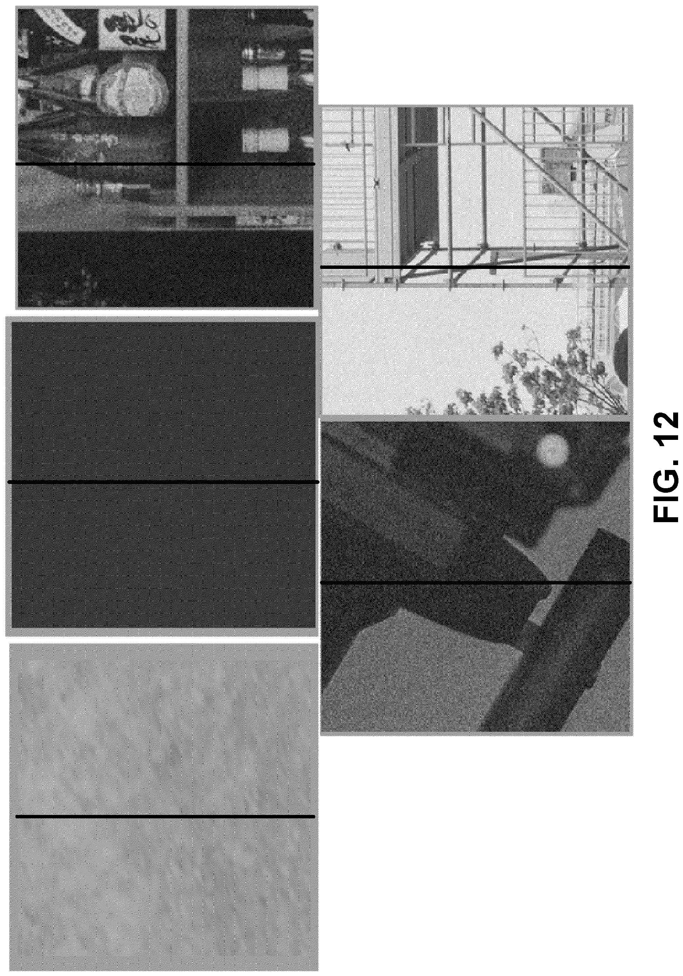

Examples of results may be shown in FIG. 12. FIG. 12 shows five examples, each with a vertical line splitting ground-truth film grain on the right side from synthesized film grain on the left side. The synthesized film grain may be generated based on the predicted film grain characteristics.

FIG. 12 illustrates examples of qualitative results on a test set.

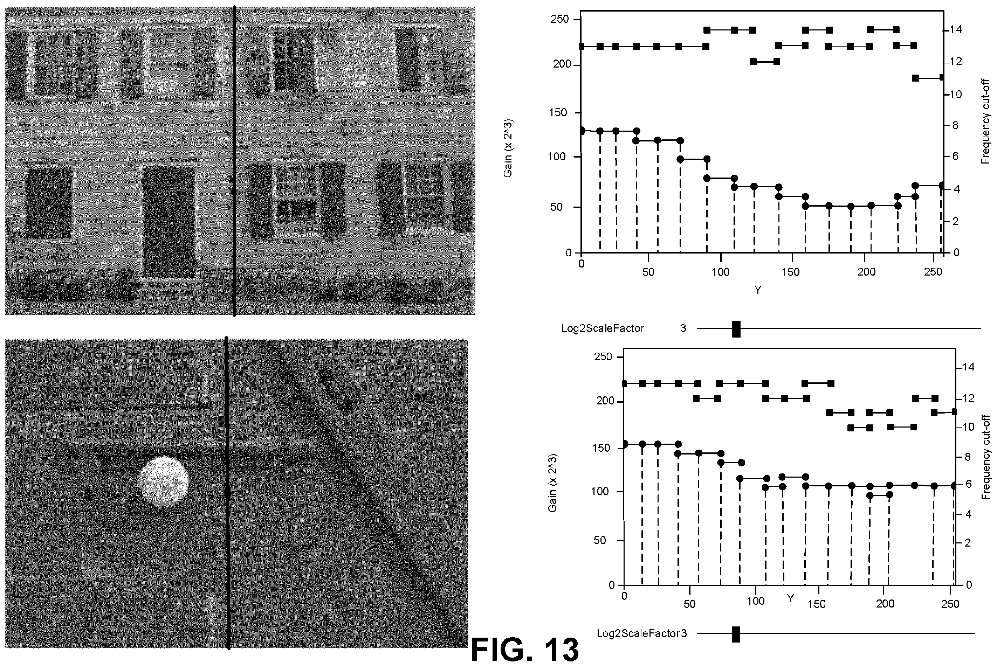

More examples of results may be shown in FIG. 13. FIG. 13 shows two examples, one above the other. Shown on the left (e.g., the first column) of each of the two examples may be a qualitative comparison between ground-truth film grain shown on the right of the dividing line and synthesized film grain shown on the left of the dividing line. Shown on the right (e.g., in the second column) of each of the two examples may be the predicted film grain characteristics in a graphical tool that was used for synthesis.

FIG. 13 illustrates examples of qualitative results with corresponding predicted FGC SEI on grainy images from a source.

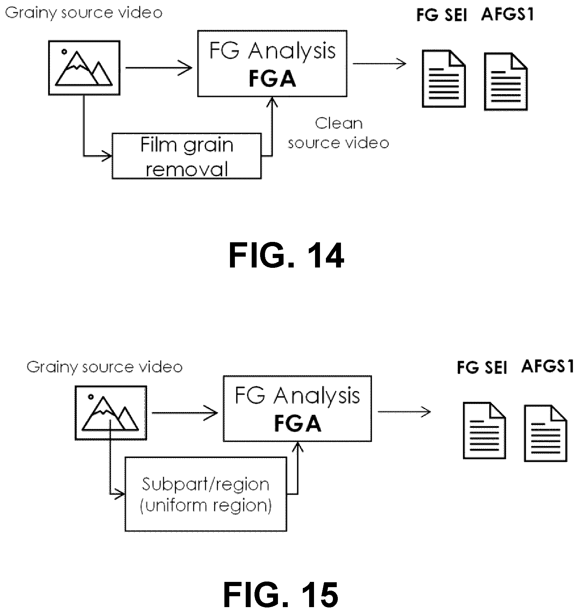

In examples (e.g., as shown in FIG. 14), a pair of grainy and clean (e.g., grain-free) source videos may be provided as input to a film grain analysis (FGA). As shown in FIG. 14, the pair of grainy/clean (e.g., grain-free) source videos may be used as input to the FGA. The grain-free version may be obtained, for example, by denoising the grainy image using a denoising method and/or by encoding the grainy image at a relatively low bitrate to remove film grain (e.g., as illustrated in FIG. 14).

FIG. 14 illustrates an example of an FGA-NN with input including a pair of grainy and clean source videos.

In examples (e.g., as shown in FIG. 15), additional input to an FGA may include a subpart or a region of the source video. As shown in FIG. 15, source video input may be accompanied by an additional input, such as a subpart or a region of the source video (e.g., the grainy or the grain-free video). An example of a subpart or a region may be a flat or a uniform region. A flat region or a uniform region may be extracted, for example, using one or more techniques described herein. For example, a flat region may be an edge-free region. For example, the Canny edge detector may be used to detect one or more flat regions and/or one or more uniform regions.

FIG. 15 illustrates an example of an FGA-NN with source video input and an input including a subpart or region of the source video.

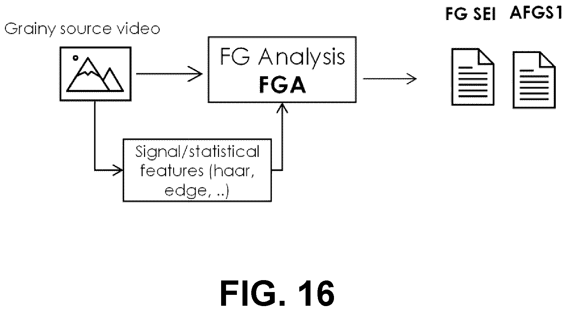

In examples (e.g., as shown in FIG. 16), additional input to an FGA may include auxiliary information from the grainy source video input. As shown in FIG. 16, an FGA-NN may receive as input grainy source video and auxiliary information, which may include, for example, one or more of the following: a map of edges, a histogram, an output of a frequency filter (e.g., Haar transform).

FIG. 16 illustrates an example of an FGA-NN with source video input and an input including auxiliary information from the grainy source video.

The following may be a non-exhaustive list of embodiments that may or may not be claimed.

Systems, methods, and instrumentalities are disclosed for a neural network (NN)-based film grain (FG) analysis.

In examples, a device (e.g., a video processing device) may include one or more processors. The one or more processors may be configured to perform one or more of the following.

The device may obtain a grainy video. The grainy video may be, or may include, a video (e.g., a video source) with film grain. The device may generate film grain characteristics. The device may feed the grainy video to a film grain analysis neural network (FGA-NN) module. The FGA-NN module may be, or may include, a feature extraction network (e.g., a backbone as described herein) and at least one task-specific head.

The at least one task-specific head may include at least one of a first task-specific head that is an interval prediction head, a second task-specific head that is a scaling factor prediction head, a third task-specific head that is a cutoff frequency prediction head, and/or a fourth task-specific head that is a log2scale prediction head. The interval prediction head may be configured to predict at least one interval associated with the grainy video. The scaling factor prediction head may be configured to predict at least one scaling factor associated with the grainy video. The cutoff frequency prediction head may be configured to predict at least one cutoff frequency associated with the grainy video. The log2scale prediction head may be configured to predict at least one log2scale factor associated with the grainy video.

At least one task-specific head may be associated with (e.g., configured to perform) a prediction task. For example, the prediction task may be, or may include, a classification task and/or a regression task.

The device may configure at least one of the interval prediction head or the scaling factor prediction head to perform a regression task. The device may configure at least one of the cutoff frequency prediction head or the log2scale prediction head to perform a classification task.

The feature extraction network (e.g., the backbone) of the FGA-NN module may be, or may include, at least one convolutional layer and/or at least one activation layer. In examples, some convolutional layers and activation layers may be grouped into a residual network and/or a set of residual networks. The feature extraction network (e.g., the backbone) of the FGA module may be or may include at least one residual network and/or another type of network with at least one convolutional layer and/or at least one activation layer (e.g., a dense network).

The at least one task-specific head of the FGA-NN module may be, or may include, at least one linear layer.

The device may feed the grainy video source (e.g., a set of grainy images) to learn film grain characteristics. For example, in a training stage, the device may apply at least one of a cross-entropy loss function to the cutoff frequency prediction head, an L2 loss function to the scaling factor prediction head, or an increment L1 loss function to the interval prediction head.

In examples, the device may obtain a grain-free video (e.g., a video without film grain) and feed the grain-free video with the grainy video to the FGA-NN module. In examples, the device may obtain at least one of a subpart of the grainy video or a subpart of the grain-free video and feed at least one of the subpart of the grainy video or the subpart of the grain-free video with the grainy video to the FGA-NN module. In examples, the device may obtain auxiliary information and feed the auxiliary information with the grainy video to the FGA-NN module.

The device may obtain (e.g., generate) at least one film grain characteristic (FGC) parameter based on an output of the FGA-NN module. For example, the at least one FGC parameter (e.g., the output of the FGA-NN module) may be associated with at least one of a format of FGC system enhancement supplemental information (SEI) or an alliance for open media (AOMedia) film grain synthesis 1 (AFGS1).

The device may apply the FGA-NN module and output at least one FGC parameter. Another device (e.g., a video decoding device) and/or another external device may add film grain (e.g., also referred to as film grain synthesis) to a grain-free video based on at least one FGC parameter.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video processing device, comprising:
a processor configured to:
obtain a grainy video, wherein the grainy video comprises a video with a film grain;
feed the grainy video to a film grain analysis neural network (FGA-NN) module, wherein the FGA-NN module comprises a feature extraction network and at least one task-specific head; and
obtain at least one film grain characteristic (FGC) parameter based on an output of the FGA-NN module.

2. The video processing device of claim 1, wherein the at least one FGC parameter is associated with at least one of a format of FGC system enhancement supplemental information (SEI) or an alliance for open media (AOMedia) film grain synthesis 1 (AFGS1).

3. The video processing device of claim 1 or claim 2, wherein the at least one task-specific head comprise at least one of a first task-specific head that is an interval prediction head, a second task-specific head that is a scaling factor prediction head, a third task-specific head that is a cutoff frequency prediction head, a fourth task-specific head that is a log2scale prediction head, wherein the interval prediction head is configured to predict at least one interval associated with the grainy video, the scaling factor prediction head is configured to predict at least one scaling factor associated with the grainy video, the cutoff frequency prediction head is configured to predict at least one cutoff frequency associated with the grainy video, and wherein the log2scale prediction head is configured to predict at least one log2scale factor associated with the grainy video.

4. The video processing device of any one of claims 1-3, wherein the feature extraction network of the FGA-NN module comprises at least one convolutional layer and at least one activation layer and wherein the at least one task-specific head comprise at least one linear layer.

5. The video processing device of any one of claims 1-4, wherein the feature extraction network of the FGA-NN module is associated with a backbone.

6. The video processing device of any one of claims 1-5, wherein the at least one task-specific head is associated with a prediction task, and wherein the prediction task comprises at least one of a classification task or a regression task.

7. The video processing device of any one of claims 1-6, wherein the processor is configured to:
configure at least one of the interval prediction head or the scaling factor prediction head to perform the regression task and at least one of the cutoff frequency prediction head or the log2scale prediction head to perform the classification task.

8. The video processing device of any one of claims 1-7, wherein the processor is further configured to at least one of:
obtain a grain-free video and feed the grain-free video with the grainy video to the FGA-NN module, wherein the grain-free video comprises a video without the film grain;
obtain at least one of a subpart of the grainy video or a subpart of the grain-free video and feed the at least one of the subpart of the grainy video or the subpart of the grain-free video with the grainy video to the FGA-NN module; or
obtain auxiliary information and feed the auxiliary information with the grainy video to the FGA-NN module.

9. A method for video processing, comprising:
obtaining a grainy video, wherein the grainy video comprises a video with a film grain;
feeding the grainy video to a film grain analysis neural network (FGA-NN) module, wherein the FGA-NN module comprises a feature extraction network and at least one task-specific head; and
obtaining at least one film grain characteristic (FGC) parameter based on an output of the FGA-NN module.

10. The method of claim 9, wherein the at least one FGC parameter is associated with at least one of a format of FGC system enhancement supplemental information (SEI) or an alliance for open media (AOMedia) film grain synthesis 1 (AFGS1).

11. The method of claim 9 or claim 10, wherein the at least one task-specific head comprise at least one of a first task-specific head that is an interval prediction head, a second task-specific head that is a scaling factor prediction head, a third task-specific head that is a cutoff frequency prediction head, a fourth task-specific head that is a log2scale prediction head, wherein the interval prediction head that is configured to predict at least one interval associated with the grainy video, the scaling factor prediction head is configured to predict at least one scaling factor associated with the grainy video, the cutoff frequency prediction head is configured to predict at least one cutoff frequency associated with the grainy video, and wherein the log2scale prediction head is configured to predict at least one log2scale factor associated with the grainy video.

12. The method of any one of claims 9-11, wherein the feature extraction network of the FGA-NN module comprises at least one convolutional layer and at least one activation layer and wherein the at least one task-specific head comprise at least one linear layer.

13. The method of any one of claims 9-12, wherein the at least one task-specific head is associated with a prediction task, and wherein the prediction task comprises at least one of a classification task or a regression task

14. The method of any one of claims 9-13, wherein the method comprises:
configuring at least one of the interval prediction head or the scaling factor prediction head to perform the regression task and at least one of the cutoff frequency prediction head or the log2scale prediction head to perform the classification task.

15. The method of any one of claims 9-14, wherein the method further comprises at least one of:
obtaining a grain-free video and feeding the grain-free video with the grainy video to the FGA-NN module, wherein the grain-free video comprises a video without the film grain;
obtaining at least one of a subpart of the grainy video or a subpart of the grain-free video and feeding the at least one of the subpart of the grainy video or the subpart of the grain-free video with the grainy video to the FGA-NN module; or
obtaining auxiliary information and feeding the auxiliary information with the grainy video to the FGA-NN module.
